Europäisches Patentamt

European Patent Office

Office européen des brevets

(19)

(11) **EP 0 775 290 B1**

(12) **EUROPÄISCHE PATENTSCHRIFT**

(45) Veröffentlichungstag und Bekanntmachung des Hinweises auf die Patenterteilung:
**07.04.1999 Patentblatt 1999/14**

(21) Anmeldenummer: **95927677.5**

(22) Anmeldetag: **20.07.1995**

(51) Int Cl.⁶: **G01C 19/56**

(86) Internationale Anmeldenummer:
**PCT/EP95/02865**

(87) Internationale Veröffentlichungsnummer:
**WO 96/05480 (22.02.1996 Gazette 1996/09)**

(54) **DREHRATENSENSOR**

GYROMETER

GYROMETRE

(84) Benannte Vertragsstaaten:
**CH DE FR LI SE**

(30) Priorität: **11.08.1994 DE 4428405**

(43) Veröffentlichungstag der Anmeldung:
**28.05.1997 Patentblatt 1997/22**

(73) Patentinhaber: **Forschungszentrum Karlsruhe GmbH**
**76133 Karlsruhe (DE)**

(72) Erfinder: **BÜSTGENS, Burkhard**
**D-76187 Karlsruhe (DE)**

(74) Vertreter: **Rückert, Friedrich, Dr.**
**Forschungszentrum Karlsruhe GmbH**
**Patente und Lizenzen**
**Weberstrasse 5**
**76133 Karlsruhe (DE)**

(56) Entgegenhaltungen:
**WO-A-93/05401**

- **PROCEEDINGS. IEEE. MICRO ELECTRO MECHANICAL SYSTEMS. AN INVESTIGATION OF MICRO STRUCTURES, SENSORS, ACTUATORS, MACHINES AND SYSTEMS (CAT. NO.93CH3265-6), PROCEEDINGS OF MICRO ELECTRO MECHANICAL SYSTEMS, FORT LAUDERDALE, FL, USA, 7-10 FEB. 1993, ISBN 0-7803-0957-X, 1993, NEW YORK, NY, USA, IEEE, USA, Seiten 143-148, BERNSTEIN J ET AL 'A micromachined comb-drive tuning fork rate gyroscope' in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Drehratensensor (Gyrometer) nach dem Oberbegriff des Patentanspruchs 1.

Der Unterschied zwischen einem Tachogenerator und einem Gyrometer liegt darin, daß ein Gyrometer die absolute Drehgeschwindigkeit mißt, während ein Tachometer zusätzlich mit einem Bezugssystem bekannter Drehgeschwindigkeit verbunden sein muß und eine dazu relative Drehgeschwindigkeit mißt. Schwingungsgyrometer nutzen den Einfluß des Coriolis-Effekts auf schwingende massebehaftete Strukturen zur Messung der Drehgeschwindigkeit aus. Der Einfluß des Coriolis-Effektes tritt in Form von Inertialkräften auf die schwingenden massebehaften Strukturen in Erscheinung. Zur Detektion der durch die Inertialkräfte hervorgerufenen Wirkung sind geeignete Sensoren an das Gyrometer angebracht oder integriert. Es sind verschiedene Schwingungsgyrometer aus der Literatur oder als Prototypen bekannt, die nach dem beschriebenen Prinzip arbeiten.

Aus J. Bernstein et al., A Micromachined Comb- Drive Tuning Fork Rate Gyroscope, Proceedings IEEE Catalog Number 93CH3265-6, S.143- 148 ist ein Gyrometer aus Silizium bekannt, welches mit mikromechanischen Fertigungsmethoden hergestellt wird. Zwei gegeneinander in 1-Richtung des Substrates harmonisch oszillierende flächig ausgedehnte Massen lenken sich bei einer Drehung um die 2-Achse des Substrates in Richtung von dessen 3-Achse jeweils entgegengesetzt aus. Die Auslenkungen in 3-Richtung sind der Oszillationsgeschwindigkeit und der Drehgeschwindigkeit direkt proportional und werden kapazitiv detektiert.

Die festen Elektroden befinden sich jeweils auf dem Silizium-Substrat und die beiden beweglichen Elektroden befinden sich an der Unterseite der beiden flächig ausgebildeten oszillierenden Massen. Sollen Drehgeschwindigkeiten weit unter 1°/sec gemessen werden, dann ist die durch Coriolis-Kräfte hervorgerufene Auslenkung der beweglichen Elektroden erheblich kleiner (mehrere Zehnerpotenzen) als die Auslenkung, die durch die Anregungsschwingung verursacht wird. Es resultiert daraus verursacht durch Fertigungstoleranzen ohne Vorhandensein einer Drehgeschwindigkeit eine unerwünschte Restschwingung der beweglichen Elektroden senkrecht zum Substrat. Diese Restschwingung verursacht ein relativ zu den kleinsten zu messenden Drehgeschwindigkeiten hohes elektrisches Restsignal, welches sich nach der Signalaufbereitung als Offset bemerkbar macht. Verändern sich durch eine Temperaturveränderung die Schwingungsparameter des Gyrometers, so wird ein daraus resultierender sich ändernder Offset zu einem nicht korrigierbaren Meßfehler.

Des weiteren ist aus der DE 42 28 795 A1 ein Drehratensensor bekannt, bei welchem auf einem senkrecht zur Substrartebene schwingenden Schwinger ein zusätzlicher Beschleunigungsaufnehmer angeordnet ist. Die Schwingungen von Schwinger und Beschleunigungssensor liegen nicht in einer Ebene. Der Hybridaufbau dieses Sensors erfordert eine kostenintensive serielle Fertigung von schwingender Struktur und Coriolis-Detektion.

Aufgabe der Erfindung ist es , ein Drehratensensor zu entwickeln, bei welchem die Coriolis-Sensorik von den schwingenden Strukturbereichen weitgehend entkoppelt ist.

Gelöst wird diese Aufgabe durch die Merkmale des Patentanspruchs 1.

Die abhängigen Ansprüche beschreiben vorteilhafte Ausgestaltungen des Sensors.

Durch die Entkopplung wird nicht nur der Messuntergrund minimiert, es kann auch die Änderung des elektrischen Restsignales und damit der nicht korrigierbare Meßfehler bei selbst größeren Änderungen der Schwingungsparameter infolge von Temperaturänderungen klein gehalten werden.

Ein weiterer Vorteil des Sensors liegt darin, daß eine kostengüstige parallele Herstellung nicht nur sämtlicher Funktionskomponenten (Aktor, schwingende Struktur, Sensor), sondern auch vieler Gyrometer auf einem Substrat möglich und eine Einzeltrimmung der Gyrometer vor der Inbetriebnahme überflüssig wird.

Die Erfindung wird im folgenden anhand dreier Ausführungsbeispiele mit Hilfe der Figuren näher erläutert.

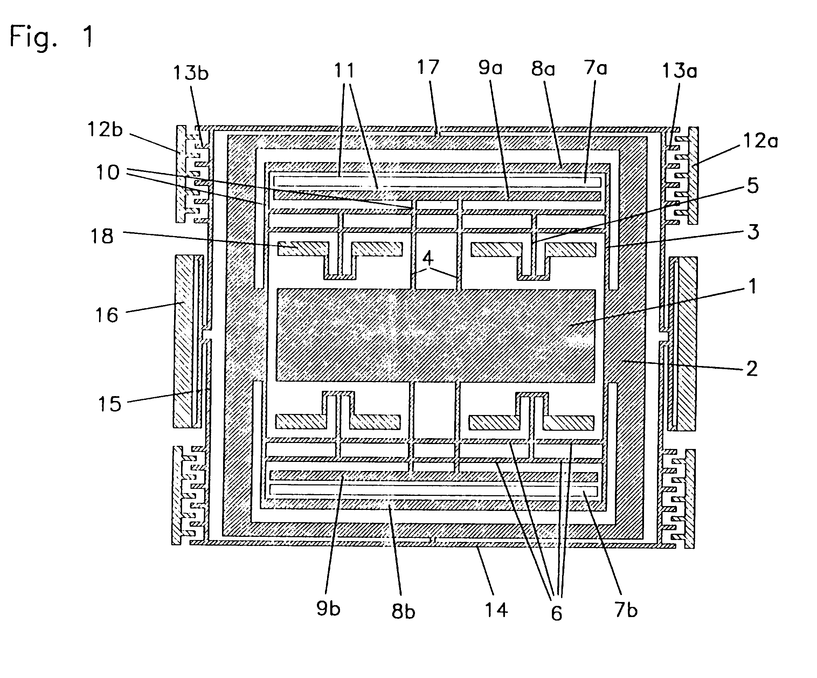

Fig. 1, Fig. 2 und Fig. 3 zeigen Auführungsbeispiele des hier vorgestellten Gyrometerdesigns.

Es handelt sich um Strukturen, die mit mikromechanischen Fertigungsmethoden in großer Stückzahl hergestellt werden können. Die Strukturen befinden sich auf einem Substrat und haben im einfachsten Fall eine gleichbleibende Strukturhöhe. Sie sind teilweise frei beweglich und zum Teil mit dem Substrat fest verbunden.

In Fig. 1 ist eine zentrale Schwingmasse 1 über ein Fachwerk von elastischen Elementen, die unten erläutert werden, mit einer zweiten Schwingmasse 2 verbunden, welche die Schwingmasse 1 und das Fachwerk umgibt. An die Schwingmasse 2 angebracht sind je vier Federn 3, die mit vier Federn 4, die mit der Schwingmasse 1 verbunden sind, die Frequenz des Anregungsmodes bestimmen. Die Federn 6 verbinden die Federn 3 mit den Federn 4 und bestimmen die Eigenfrequenz des Detektionsmodes. Das schwingungsfähige System ist über die Federn 5 einerseits an den Federn 6 und andererseits mit den Haltepunkten 18 auf dem Substrat (hier nicht dargestellt) verbunden. An Verlängerungen 10 der Federn 3 sind die beweglichen Elektroden 8a, 8b befestigt. An den Verlängerungen 10 der Federn 4 sind die beweglichen Elektroden 9a, 9b befestigt. Zwischen den beweglichen Elektroden 8a, 9a und 8b, 9b befinden sich die fest mit dem Substrat verbundenen Elektroden 7a, 7b. Diese Elektroden bilden Kondensatoren, deren Kondensatorspalten 11 senkrecht zur Darstellungsebene verlaufen. Die Schwingungsanregung erfolgt elektrostatisch über die Kammstrukturen 12a, 13a und wird über die Stäbe 14 und 15 über die Punkte 17 auf das schwingungsfähige System übertragen. Die Stäbe 15 sind mit den Haltepunkten 16 mit dem Substrat verbunden. Die Kammstrukturen 12b, 13b dienen der Überwachung der Anregungsschwingung. Die Kammstrukturen 12a, 12b sind fest mit dem Substrat verbunden.

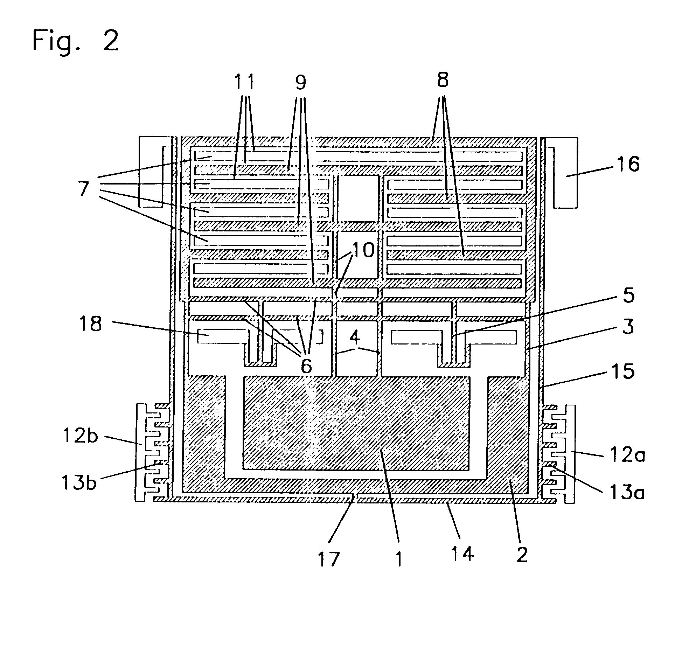

Der in Fig. 2 dargestellte Sensor entspricht der oberen oder der unteren Hälfte des in Fig. 1 dargestellten Sensors. Es sind jedoch wesentlich mehr Kondensatorelektroden 7, 8, 9 vorhanden, wodurch das elektrische Meßsignal vergrößert wird. Die Schwingmassen 1, 2 sind asymmetrisch angeordnet und nur einseitig gelagert.

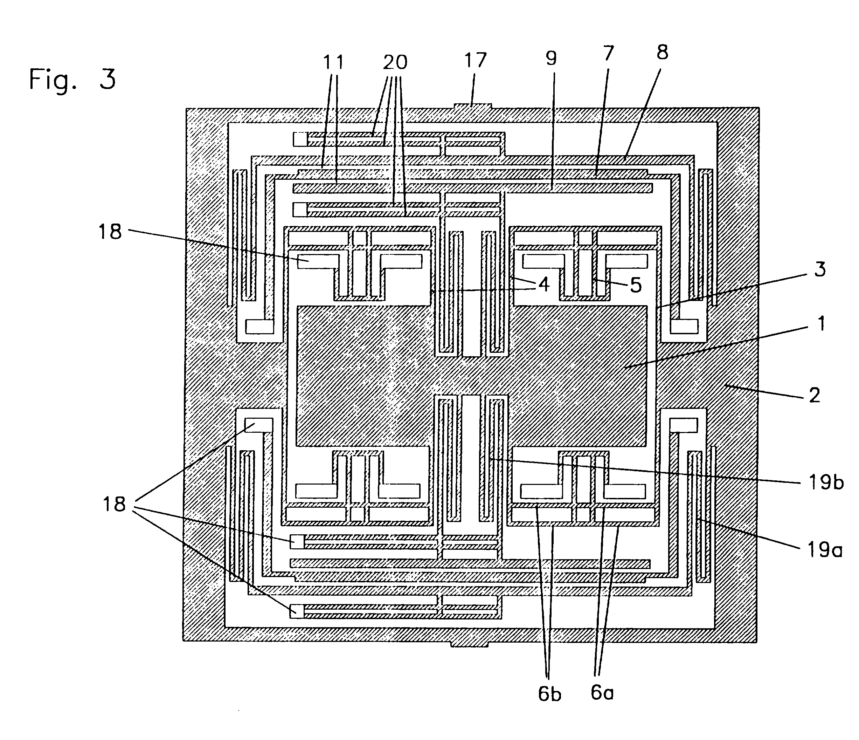

Der in Fig. 3 dargestellte Sensor entspricht in etwa dem von Fig. 1. Das Anregungssystem, bestehend aus den Stäben 14,15 und den Kammstrukturen zur Anregung 12, 13 sind hier nicht dargestellt. Die beweglichen Elektroden 8a, 8b sind hier direkt über Federn 19 mit den Schwingmassen 1, 2 verbunden und werden von Federn 20, welche über Haltepunkte 18 mit dem Substrat verbunden sind, parallel geführt. Die festen Elektroden 7a, 7b sind hier ebenfalls nur über jeweils zwei Haltepunkte 18 mit dem Substrat verbunden.

Die hier vorgestellten Gyrometer sind so konfiguriert, daß die Anregungsschwingung in der 1-Richtung der Substratebene erfolgt, und daß im Gegensatz zu obigem Literaturbeispiel aus der Drehung um einer zum Substrat senkrecht verlaufenden Achse (3-Richtung) die Coriolis-Kräfte in Richtung der 2-Achse des Substrates resultieren. Die erfindungsgemäßen Gyrometer bestehen aus einer ersten Masse 1 und einer zweiten Masse 2, die im Idealfall gleich groß sind, $m(1){\sim}m(2)=m$. Die beiden Massen können nebeneinander liegen oder ineinander verschachtelt sein. Ineinander verschachtelte Schwingmassen bieten den Vorteil eines vollkommen symmetrischen Gyrometer-Gesamtaufbaus. Die beiden Massen sind mit elastischen Elementen (gerade, gekrümmt oder in Meanderform ausgebildeten Stäbe, hier als Schwingfedern bezeichnet, die sich senkrecht zur Stabachse und parallel zum Substrat wie weiche Federn und entlang der jeweiligen Stabachse steif verhalten) verbunden. Die Masse ml ist mit den N1 Federn der Steifigkeit cl 4 verbunden und die Masse 2 mit N2 Federn der Steifigkeit c2 3 verbunden. Die Summe der Steifigkeiten der N1 Schwingfedern 4 ist im Idealfall gleich der Summe der Steifigkeiten der N2 Schwingfedern 3. Das jeweils entgegengesetzte Ende der Schwingfedern 3 und 4 ist mit einer Struktur verbunden, die aufgrund der Gleichheit der Massen 1 und 2 sowie der Gleichheit von N1*c1 und N2*c2 den Schwingungsknoten des gekoppelten Schwingungssystems darstellt. Die Massen 1 und 2 bestimmen zusammen mit der jeweiligen Summe der Schwingfedern 3 und 4 die Anregungseigenfrequenz wo der Anregungsschwingung des Gyrometers:

$$wo=(N1*c1/m)^{0.5} = (N2*c2/m)^{0.5}$$

Mit Hilfe von elektro-mechanischen Wandlern werden die Schwingmassen 1 und 2 zu gegenphasigen harmonischen Schwingungen der Anregungseigenfrequenz wo angeregt. Dabei ist es durch die hohe Güte der Anregungsschwingung ausreichend, nur eine einzige Masse anzuregen. Der zeitliche Verlauf der Schwing-Geschwindigkeiten v1(t) und v2(t) der Massen 1 und 2 ergibt sich zu:

$$v1(t)=xo*w*coswt$$

$$v2(t)=-xo*w*coswt$$

xo sei die Amplitude der Schwingung $x(t)=xo*sinwt$ der Masse 1. Das schwingungsfähige System ist an der Stelle des Schwingungsknotens über 'Aufhängungsfedern' 5, die sich in Richtung der Schwingbewegung weich verhalten, auf einem Substrat befestigt. Diese Befestigung ist deshalb in Schwingrichtung weich gestaltet, um Ausgleichbewegungen zuzulassen, die das Einschwingen der beiden durch die Schwingmasse 1 und die N1 Schwingfedern 4 sowie die Schwingmasse 2 und die N2 Schwingfedern 3 gegebenen Einzelschwinger erst zu ermöglichen. Ferner ermöglichen sie auch bei durch Herstellungstoleranzen hervorgerufenen Unsymmetrien der beiden Einzelschwinger eine phasenstabile Kopplung der Einzelschwinger. Wird das beschriebene Schwingungssystem mit der Drehgeschwindigkeit Om in Drehung um eine zur Strukturebene senkrechte Achse (3-Achse) versetzt, so wirken in Abhängigkeit der momentanen Schwinggeschwindigkeit vl(t) und v2(t) der beiden Schwingmassen 1 und 2 inertiale Coriolis-Kräfte Fc auf die schwingenden Massen in Richtung der 2-Achse des Substrats:

$$Fc,1(t)=2*m*Om*v1(t)$$

$$Fc,2(t)=-2*m*Om*v2(t)$$

Durch den harmonischen Zeitverlauf der Schwinggeschwindigkeiten vl(t) und v2(t) ergibt sich der folgende Zeitverlauf für die jeweiligen Coriolis-Kräfte:

$$Fc,1(t)=2*m*Om*xo*w*coswt$$

$$Fc,2(t)=-2*m*Om*xo*w*coswt$$

Die Übertragung des Drehmomentes auf die Struktur, welches bei einer Änderung der Drehgeschwidigkeit Om auftritt, erfolgt über die Aufhängungsfedern 5 auf die Bereiche der Schwingungsknoten. Die Aufhängungsfedern sind deshalb so gestaltet und angeordnet, daß sie einerseits die Schwingungskopplung der Anregungsschwingung zulassen (s. o.) und andererseits das Drehmoment steif (da in Stabachse) übertragen können. Die Coriolis-Kraft wirkt auf die Massen ml und m2 gegenphasig. Um diese Kraft durch elektrostatische, elektromdynamische, elektromagnetische, piezoelektrische oder piezoresistive Wandlungsprozesse in eine elektrisch meßbare Größe wandeln zu können, muß sie in eine Bewegung überführt werden. Dazu befinden sich elastische Elemente in der Struktur, die eine Bewegung der Massen 1 und 2 in Richtung der inertialen Coriolis-Kräfte zulassen. Diese elastischen Elemente sind wiederum Stäbe 6, die sich in Richtung der Coriolis-Kräfte leicht verbiegen lassen und sich in Richtung ihrer Stabachse steif verhalten. Sie sind dadurch gekennzeichnet, daß ihre Stabachse senkrecht zur Stabachse der Schwingfedern 3 und 4 in der Strukturebene verläuft. Sie können direkt mit den Schwingmassen 1 und 2 oder, wie in den drei Ausführungsbeispielen der Fall, über die Schwingfedern 3 und 4 mit den den Schwingmassen 1 und 2 verbunden sein, oder sie können über in Coriolis-Richtung steife Zwischenelemente mit den Schwingmassen verbunden sein. Die elastischen Elemente 6, hier bezeichnet als 'Coriolis-Federn', die die Auslenkung der Schwingmassen in Richtung der inertialen Coriolis-Kräfte ('coriolis-Richtung') bestimmen, besitzen jeweils eine Federsteifigkeit cc, insgesamt Nc*cc (Nc ist die Zahl der Federn, die pro Schwingmasse in Coriolis-Richtung ausgelenkt werden). Coriolis-Federn und Schwingmassen bilden so in Coriolis-Richtung ein schwingungsfähiges System mit einer charakteristischen Eigenfrequenz wc:

$$wc = (Nc*cc/m)^{0.5}$$

Jeder der bisher beschriebenen Stäbe hat somit in den drei Ausführungsbeispielen Fig. 1, Fig. 2 und Fig. 3 eine Doppelfunktion: Die Schwingfedern 3 und 4 bestimmen zusammen mit den Schwingmassen ml und m2 die Merkmale der Anregungsschwingung. Gleichzeitig übertragen sie die von den Schwingmassen ausgehenden Coriolis-Kräfte auf die Coriolis-Federn.

Die Coriolis-Federn erlauben eine Auslenkung der Schwingmassen in Coriolis-Richtung infolge der Coriolis-Kräfte bei Drehung, um eine mechanisch-elektrische Signal-Wandlung zu ermöglichen. Gleichzeitig sind sie Teil des Schwingungsknotens der Anregungs-Schwingung und übertragen die Kopplungs-Kräfte der Anregungs-Schwingung.

Die bisher beschriebene schwingungsmechanische Grundstruktur, welche eine phasenstabile Anregungsschwingung und eine sauber geführte Bewegung in Coriolis-Richtung bietet, bildet die Basis für die Entkopplung der Coriolis-Sensorik von der Anregungsschwingung. Durch diese Entkopplung werden die eingangs genannten Nachteile herkömmlicher Gyrometer, nämlich das Vorhandensein eines hohen Restsignales, das durch das Mitschwingen der Coriolis-Sensorik entsteht und durch Temperaturänderungen zu einem veränderlichen Offset führt, übergangen. Das bisher beschriebene Schwingungssystem weist zwei ausgeprägte, nutzbare Moden auf. Der Anregungsmode wird bestimmt durch die Schwingmassen 1, 2 und die Federn 3, 4 und der ebenfalls in Richtung die Substratebene ausgeprägte Coriolis-Mode, welche senkrecht zur Anregungsmode ausgebildet ist, wird bestimmt durch die Massen 1, 2 und die Federn 6.

Im folgenden wird auf die Gewinnung eines Meßsignals eingegangen. Grundsätzlich läßt sich jedes der o. g. mechanischelektrischen Wandlerprinzipien für die Signalwandlung der Bewegung in Coriolis-Richtung verwenden. Piezoresistive oder piezoelektrische Wandler können als Dehnungssensoren geeignet in die Stäbe 6 mit mikrotechnischen Herstellungsmethoden eingesetzt werden, u. v. a. mehr. Da auf allgemeine Möglichkeiten der elektrischen Signalwandlung nicht näher eingegangen werden soll, beziehen sich die weiteren Ausführungen lediglich auf eine in den Figuren 1, 2 und 3 skizzierte elektrostatische (kapazitive) Signalwandlung. Ein derartiger kapazitiver Wandler besitzt eine feste Elektrode, die mit dem Substrat mechanisch und elektrisch verbunden ist, und eine bewegliche Elektrode, die ein Teil der beweglichen Gesamtstruktur darstellt. Die Kondensatorflächen werden in allen skizzierten Fällen durch die Stirnseiten der als Elektroden fungierenden Strukturen gebildet und werden im folgenden als Kondensatorplatten bezeichnet.

Ein wesentliche Verbesserung bzgl. o. g. Gyrometer bieten die hier vorgestellten Designs durch die Entkopplung der Coriolis-Sensorik von der Anregungs-Schwingung. Es sind hier zwei Möglichkeiten dargestellt, wie sich die Coriolis-Sensorik von der Anregungsschwingung entkoppeln läßt:

1. In Fig. 1 und Fig. 2 erfolgt die Entkopplung von der Anregungsschwingung, indem 'an der Stelle des Schwingungsknotens der Anregungsschwingung' die Verbindung zur Coriolis-Sensorik hergestellt wird. Die Bewegungs-Übertragung erfolgt mit den Verbindungsstrukturen 10.

Auf diese Weise wird die auf die Schwingmassen wirkende hohe Anregungs-Beschleunigung von der Coriolis-Sensorik, die i.a. die Eigenschaften eines Beschleunigungssensors in Coriolis-Richtung besitzt und nur beschränkt richtungsselektiv ist, entkoppelt.

2. In Fig. 3 erfolgt die Entkopplung von der Anregungs-schwingung, indem sehr lange Stäbe 19a und 19b direkt mit den Schwingmassen 1 und 2 verbunden sind, welche durch ihre Biegeweichheit die Anregungsschwingung nur geringfügige beeinflussen, jedoch die Bewegung in Coriolis-Richtung auf die kapazitiven Sensoren übertragen können. Die Stäbe sind am Beispiel von Fig. 3 gefaltet als Mäander ausgeführt, um die Gesamtabmessungen des Gyrometers klein zu halten. In Verbindung mit diesen langen Stäben ist es möglich, eine zusätzliche Parallelführung 20 an die beweglichen Kondensatorplatten anzubringen, welche eine Bewegungs-Einkopplung der in 1-Richtung verlaufenden Anregungsschwingung vollkommen unterbindet. Durch diese Art der Entkopplung können auch größere Unsymmetrien der beiden Anregungsschwinger (z. B. unterschiedliche Schwingmassen 1 und 2) von der Coriolis-Sensorik entkoppelt werden.

Eine weitere wirkungsvolle Variante der Entkopplung der Coriolis-Sensorik, die hier nicht dargestellt ist, ergibt sich, wenn die (gefalteten) Verbindungsstäbe 19a und 19b in Fig. 3 statt mit den Schwingmassen 1 und 2 mit den Stellen 10, also mit dem Schwingungsknoten der Anregungsschwingung, verbunden sind. Auf diese Weise kann die Beeinflussung der Anregungs-Schwingung durch die Stäbe 19a und 19b im Vergleich zur in Fig. 3 dargestellten Variante weiter verringert werden und so die effektiven Längen der Stäbe 19a und 19b verkleinert werden.

Die kapazitiven Wandler bestehen aus den festen, auf dem Substrat befindlichen Strukturen (7a und 7b), und den beweglichen Kondensatorplatten 8a, 8b, 9a, 9b, die jeweils über in Längsrichtung (=Coriois-Richtung) steife Strukturen 10 mit den Schwingfedern 3 und 4 verbunden sind. Zwischen den korrespondierenden Plattenpaaren der beiden so gebildeten Kondensatoren ist ein möglichst schmaler Spalt 11 vorhanden, der bei Verwendung mikromechanischer Herstellungsmethoden typischerweise die Größenordnung 10^-6 aufweist. Da eine hohe Grundkapazität für die Signalauswertung vorteilhaft ist, ist eine hohe Strukturhöhe anzustreben. Eine Erhöhung der Grundkapazität ist ferner durch eine elektrische und zugleich mechanische Parallelschaltung mehrerer Kondensatorstrukturen der beschriebenen Art möglich (Fig. 2).

In Fig. 1 und Fig. 3 bildet die feste Elektrode 7a und die beiden beweglichen Elektroden 8a, 9a die erste sich verändernde Kapazität und die feste Elektrode 7b und die beiden beweglichen Elektroden 8b und 9b die zweite sich verändernde Kapazität. Eine Drehung des Gyrometers bewirkt eine gegensinnige Bewegung der Schwingmassen 1 und 2 in Coriolis-Richtung und damit eine gleichsinnige Kapazitätsänderung der Kapazitäten zwischen 7a, 8a und 7a, 9a, bzw. der Kapazitäten zwischen 7b, 8b und 7b, 9b. Die Änderung der ersten Gesamtkapazität, gebildet durch 7a, 8a und 7a, 9a, und der zweiten Gesamtkapazität, gebildet durch 7b, 8b und 7b, 9b, erfolgt gegensinnig. In Fig. 2 finden in Wechselwirkung mit den beweglichen Kondensatorplatten um die festen Kondensatorplatten 7a und 7b herum jeweils gegensinnige Kapazitätsänderungen statt.

Durch die Verwendung der festen, auf dem Substrat befindlichen Kondensatorplatten ist es möglich, die gesamte bewegliche Struktur auf ein konstantes elektrisches Potential zu legen. Elektrische isolierte Bereiche brauchen auf der schwingenden Struktur nicht durch zusätzliche Fertigungsschritte angebracht zu werden.

Das hier vorgestellte Gyrometerkonzept wurde in Hinsicht auf eine minimale Störempfindlichkeit entwickelt. Die beiden wesentlichen Störgrößen sind dabei lineare Störbeschleunigungen, die in Richtung der Coriolis-Bewegung auftreten, sowie thermische Einflüsse, die sämtliche mechanischen und elektrischen Parameter beeinflussen. Lineare Störbeschleunigungen haben wegen der elektronischen Demodulation des Meßsignals nur dann einen Einfluß auf dieses, wenn sie Spektralanteile der Arbeitsfrequenz oder ungeradzahliger Vielfache der Arbeitsfrequenz enthalten. Treten diese Störbeschleunigungen in Anregungsrichtung auf, so kann deren Einfluß auf das Meßresultat aufgrund der sehr hohen inhärenten Beschleunigungen der Anregungsschwingung entweder vernachlässigt werden oder kann auf einfache Weise durch ein Anregungs-Referenzsignal, welches durch o. g. Wandlermechanismen ein zur Anregungsbewegung proportionales Signal liefert, kompensiert werden, indem das Nutzsignal zur Amplitude des Referenzsignales relativiert wird.

Lineare Störbeschleunigungen in Richtung der wirkenden Coriolis-Kräfte können in der Regel sehr viel höher sein als die Coriolis-Beschleunigungen selbst und führen somit zu einer starken Veränderung der Meßgröße.

In dem hier vorgestellten Gyrometerkonzept findet die Kompensation der Störbeschleunigungen in Coriolis-Detektionsrichtung auf mechanische Weise statt. Damit können die Nachteile der sonst üblichen elektrischen Kompensation, die im wesentlichen eine Differenzbildung zweier im Vergleich zum Meßsignal hoher Störsignale vornimmt und sehr temperaturempfindlich ist, vermieden werden. Ferner führen die hohen bei herkömmlichen Gyrometern auftretenden Störsignale zu einer unerwünscht hohen Aussteuerung der Auswerteelektronik, wodurch eine Verschlechterung des Rausch-Abstandes des Nutzsignales in Kauf genommen werden muß. Am Beispiel der elektrostatischen Detektion in Fig 1 führen lineare Störbeschleunigungen zu einer gleichphasigen Auslenkung der Schwingmassen 1 und 2. Die gleichphasigen Auslenkungen der Schwingmassen führen zu einer gleichphasigen Bewegung der beweglichen Kondensatorplatten 8a, 8b, 9a, 9b relativ zu den feststehenden Kondensatorplatten 7a, 7b. Die Kapazität der Kondensatoren 8a + 9a, 7a und 8b + 9b, 7b ändert sich dabei nicht, das elektrisches Signal verändert sich nicht.

Die in Fig. 1, Fig. 2 und Fig. 3 dargestellten Designs verfügen über eine elektrostatische Anregung und über eine elektrostatische Referenzsignal-Sensorik, welche ein Signal liefert, das als Rückkopplungsgröße für die Erzeugung der Anregungsschwingung benötigt wird und als Referenzgröße für Kompensationszwecke verwendet werden kann. Sowohl Anregung als auch Referenzsignal-Bildung können auf elektrodynamischem Wege erfolgen, indem ein zur Substratebene senkrechtes magnetisches Feld beispielsweise durch Permanentmagneten aufgebaut wird und langgestreckt ausgebildete, mit dem Substrat elektrisch verbundene Strukturen stromdurchflossene Leiter bilden. Zur besseren Übersicht sind in Fig. 3 die Anregungs-Aktorik und die Referenzsignal-Sensorik nicht dargestellt (siehe dazu Fig. 1). 12a sind die feststehenden Elektroden und 13a sind die beweglichen Elektroden des elektrostatischen Aktors. 12b sind die feststehenden Elektroden und 13b sind die beweglichen Elektroden des elektrostatischen Sensors zur Kontrollierung der Anregungsschwingung. Sämtliche Elektroden und Gegenelektroden bestehen aus vielen parallelen Einzelplatten, die ineinandergreifen, um eine hohe Auslenkung zu ermöglichen. Da neben der gewünschten senkrechten Kraftkomponente des Aktors zusätzlich eine Komponente in Richtung der auf die Massen wirkenden Coriolis-Kräfte wirkt, sind die beweglichen Elektroden über elastische Stäbe mit der äußeren Schwingmasse verbunden. Die Stäbe 15, welche über die Bereiche 16 fest mit dem Substrat verbunden sind, verhindern eine Bewegung des Aktors in Coriolis-Richtung (=Stabachse) und verhalten sich in Richtung der Anregungsschwingung biegeweich, sodaß sie die Anregungsschwingung nur geringfügig beeinflussen. Die Stäbe 14 bilden die Kraftübertragung zwischen schwingender Masse 2 und Sensor/Aktor in Richtung ihrer Stabachse und verhalten sich in Coriolis-Richtung weich Die Stäbe 14 sind an den Stellen 17 mit der Schwingmasse 2 verbunden.

Im folgenden werden die Vorteile des Sensors noch einmal zusammengefaßt:

Der Sensor ist ein mechanisches, transversal schwingendes Schwingungsgyrometer, bestehend aus zwei oder mehreren gegeneinander schwingenden, diskretisierbaren Massen und Gruppen von diskretisierbaren elastischen Elementen, welche die Schwingfrequenz bestimmen und welche die Schwingungskopplung der Massen herstellen, wobei alle Komponenten Teil einer zweidimensional strukturierten Struktur prozeßbedingt gleichbleibender Strukturhöhe, herstellbar durch eine einzige zusammenhängende Prozeßfolge, sind. Der Sensor enthält Strukturen, welche bei einer Drehung um die zur Strukturebene senkrechten Achse eine durch Coriolis-Kräfte hervorgerufe Bewegung ermöglichen, welche zur sensorischen Detektion verwendet werden kann. Dies geschieht dadurch, daß in senkrechter Richtung zu den Schwingfedern zusätzlich Federn so angebracht sind, daß sie eine Bewegung der schwingenden Massen in Richtung der Coriolis-Kräfte ermöglichen. Federn verallgemeinert bedeutet hier Strukturen, die sich in Richtung ihrer Stabachse sehr viel steifer verhalten als senkrecht zur Stabachse, parallel zur Substratebene z.B. Mäander oder Blattfedern.

Die dargestellten Designs sorgen für eine Entkopplung der Sensorik von der Anregungsschwingung des Gyrometers. Die Entkopplung des Sensors erfolgt auf zwei Arten durch unterschiedliche Stäbe. Die auf die Schwingmassen wirkenden Coriolis-Kräfte, die senkrecht wirken zu einem senkrecht zur Strukturebene wirkenden Drehvektor und zu dem in Richtung der Strukturebene zeigenden Geschwindigkeitsvektor der Anregungsschwingung, werden im ersten Fall über diese Stäbe, die in der Strukturebene liegen, auf die Coriolis-Sensorik übertragen. Die elastischen Stäbe sind Elemente der Struktur, die lediglich die Coriolis-Kräfte auf die Coriolis-Sensorik übertragen und durch ihre Biegeweichheit die Betriebs-Schwingung des Gyrometers nicht behindern. Sie sind einseitig mit je einer Schwingmasse verbunden und an ihrem zweiten Ende mit der kapazitiven Sensorik.

Im zweiten Fall ist das Schwingungssystem aus zwei Schwingmassen und den jeweils korrespondierenden Schwingfedern derart gestaltet, daß sich die Ankopplung der Coriolis-Sensorik an der Stelle des Schwingungsknotens des Anregungsmodes befindet. Dadurch ist die Coriolis-Sensorik von der Anregungsbewegung des Gyrometers weitestgehend entkoppelt.

Die Coriolis-Kräfte wirken auf ein schwingungsfähiges System, dessen träge Massen aus den beiden Schwingmassen selbst bestehen und dessen elastische Bereiche aus Strukturelementen bestehen, die sich im Bereich des Schwingungsknotens der Anregungsschwingung befinden. Dadurch wird eine Bewegung in Richtung der Coriolis-Kräfte ermöglicht, welche durch unterschiedliche mechanisch-elektrische Wandlerprozesse detektiert werden kann.

Die beschriebenen elastischen Bereiche sind einzelne oder mehrere parallel geschaltete, senkrecht zur Stabachse parallel zur Substrat-Oberfläche federnde Stabelemente (Blattfedern ).

Die beiden Schwingmassen können nebeneinander liegen oder ineinander verschachtelt sein. Letzteres bietet eine hohe Symmetrie und hohe Drehbeschleunigungsunabhängigkeit.

Die Schwingungs-Anregung und die Bildung eines Referenzsignales erfolgt auf elektrostatischem Wege über Kammstrukturen, die durch eine besondere Struktur mit einer oder beiden Schwingmassen verbunden ist.

Die kapazitive Detektion der durch Coriolis-Kräfte induzierten Bewegung erfolgt derart, daß lineare Störbeschleunigungen in Richtung der Coriolis-Kräfte zu keiner Veränderung der Kapazität führen.

Bezugszeichenliste:

1, 2     Schwingmassen
3 , 4     Schwingfedern

| 5 | Aufhängungsfedern |
| 6 | Coriolis-Federn |
| 7 | feste Elektroden |
| 8 , 9 | bewegliche Elektroden |
| 10 | Verbindungsstruktur |
| 11 | Kondensatorspalte |
| 12, 13 | Kammstrukturen |
| 14, 15 | Stäbe |
| 16 | Haltepunkte |
| 17 | Verbindungsstück |
| 18 | Haltepunkte auf dem Substrat |
| 19 | Entkoppelfeder |
| 20 | Führungsfeder |

**Patentansprüche**

1. Drehratensensor bestehend aus mindestens zwei Schwingmassen (1, 2), welche über Federelemente (3, 4) mit einander zu einem schwingungsfähigen System verbunden sind, wobei das schwingungsfähige System auf einem Substrat gehaltert wird, Aktoren (12, 13) zum Anregen von Schwingungen und mindestens einem Aufnehmer (7, 8, 9) für den Nachweis der Corioliskraft, dadurch gekennzeichnet, daß die Federelemente (3, 4) und die Schwingmassen so angeordnet und ausgebildet sind, daß das schwingungsfähige System nur Schwingungen in mindestens zwei Schwingungsmoden parallel zur Substratebene ausführen kann, wobei eine Mode als Anregungsmode der Schwingungsanregung dient und die zweite vorzugsweise dazu orthogonale Mode als Detektionsmode bei Drehung um eine Achse senkrecht zum Substrat durch Corioliskräfte angeregt wird.

2. Drehratensensor nach Anspruch 1, dadurch gekennzeichnet, daß mindestens ein Aufnehmer (7, 8, 9) für den Nachweis der Corioliskraft als Kondensator ausgebildet ist, wovon ein Teil (8, 9) durch Teile des schwingungsfähigen Systems und der andere Teil (7) durch starr mit dem Substrat verbundene Komponenten gebildet wird, wobei die fest mit dem Substrat verbundenen Komponenten (7) in die schwingungsfähige Struktur hineinragen.

3. Drehratensensor nach Anspruch 1 oder 2, gekennzeichnet durch Federn (19), die in Anregungsrichtung weich und in Coriolisrichtung starr sind, zum Entkoppeln von Schwingungs- und Detektionsmode.

4. Drehratensensor nach Anspruch 1 oder 2, dadurch gekennzeichnet, daß Teile des schwingungsfähigen Systems die Aufnehmer (7, 8, 9) für den Nachweis der Corioliskraft mit Punkten verbindet, die für die Anregungsmode ein Schwingungsknoten und für die Detektionsmode ein Schwingungsbauch sind.

**Claims**

1. Angular rate sensor, consisting of at least two oscillating weights (1, 2) which are connected to each other by spring elements (3, 4) to form an oscillating system which is held on a substrate, actuators (12, 13) for the excitation of oscillations and at least one transducer (7, 8, 9) for measuring the Coriolis force, characterized by the spring elements (3, 4) and the oscillating weights being arranged and designed such that the oscillating system is only able to perform oscillations in at least two oscillating modes parallel to the substrate layer with one mode serving for the excitation of oscillation as the excitation mode and the other mode which is preferably orthogonal to the first one being the detection mode which is excited by Coriolis forces during the rotation around an axis that is vertical to the substrate.

2. Angular rate sensor according to claim 1, characterized by at least one transducer (7, 8, 9) being designed as a condenser for the detection of the Coriolis force, with one part (8, 9) formed by parts of the oscillating system and the other part (7) by components which are fixed to the substrate in a rigid manner, characterized by the components (7) fixed to the substrate penetrating into the oscillating structure.

3. Angular rate sensor according to claim 1 or claim 2, characterized by the use of springs (19) which are soft in the excitation direction and rigid in the Coriolis direction for the decoupling of the oscillation and the detection mode.

4. Angular rate sensor according to claim 1 or claim 2, characterized by parts of the oscillating system connecting the transducers (7, 8, 9) for the detection of the Coriolis force with points that represent an oscillation node for the excitation mode and an oscillation amplitude for the detection mode.

**Revendications**

1. Capteur de vitesse de rotation formé d'au moins deux masses oscillantes (1, 2) reliées par des éléments à ressort (3, 4) l'une à l'autre pour former un système susceptible d'osciller,

le système susceptible d'osciller étant maintenu sur un substrat, des actionneurs (12, 13) pour exciter les oscillations et au moins un récepteur (7, 8, 9) pour prouver la force de Coriolis,

caractérisé en ce que

les éléments à ressort (3, 4) et les masses oscillantes sont disposés et réalisés pour que le système susceptible d'osciller ne puisse exécuter que des oscillations dans au moins deux modes d'oscillation, parallèlement au plan de substrat,

un mode servant de mode d'excitation pour l'excitation en oscillation et le second mode, de préférence orthogonal au précédent, servant de mode de détection lorsqu'on tourne autour d'un axe perpendiculaire au substrat, en étant excité par les forces de Coriolis.

2. Capteur de rotation selon la revendication 1, caractérisé par

au moins un récepteur (7, 8, 9) pour prouver la force de Coriolis, ce récepteur étant réalisé en forme de condensateur et une partie (8, 9) est formée par le système susceptible d'osciller et l'autre partie (17) est formée par un composant relié rigidement au substrat, les composants (7) reliés solidairement au substrat pénétrant à l'intérieur de la structure susceptible d'osciller.

3. Capteur de rotation selon l'une des revendications 1 ou 2, caractérisé en ce que

les ressorts (10), qui sont souples dans la direction d'excitation et rigides dans la direction de Coriolis, servent au découplage des oscillations et du mode de détection.

4. Capteur de rotation selon l'une des revendications 1 ou 2, caractérisé en ce que

les parties du système susceptibles d'osciller, qui relient les capteurs (7, 8, 9) pour prouver la force de Coriolis avec des points prévus pour le mode d'excitation, sont des noeuds d'oscillation et pour le mode de détection il s'agit des ventres d'oscillation.

Fig. 1

EP 0 775 290 B1

Fig. 2

Fig. 3